(19) **Europäisches Patentamt European Patent Office Office européen des brevets**

(11) **EP 2 556 404 B1**

(12) **FASCICULE DE BREVET EUROPEEN**

(45) Date de publication et mention de la délivrance du brevet:
**20.03.2024 Bulletin 2024/12**

(21) Numéro de dépôt: **11717309.6**

(22) Date de dépôt: **05.04.2011**

(51) Classification Internationale des Brevets (IPC):
**G02B 26/08** (2006.01) **G02B 7/188** (2021.01)
**G02B 26/06** (2006.01)

(52) Classification Coopérative des Brevets (CPC):
**G02B 26/0825; G02B 26/06**

(86) Numéro de dépôt international:
**PCT/FR2011/050761**

(87) Numéro de publication internationale:
**WO 2011/124838 (13.10.2011 Gazette 2011/41)**

(54) **MIROIR DEFORMABLE A FAIBLE EMPREINTE DE COLLAGE ET PROCEDE DE FABRICATION D'UN TEL MIROIR**

DEFORMIERBARER SPIEGEL MIT KLEINER KLEBEFFLÄCHE UND HERSTELLUNGSVERFAHREN FÜR EINEN DERARTIGEN SPIEGEL

DEFORMABLE MIRROR HAVING A LOW BONDING FOOTPRINT AND PROCESS FOR MANUFACTURING SUCH A MIRROR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2010 FR 1052599**

(43) Date de publication de la demande:
**13.02.2013 Bulletin 2013/07**

(73) Titulaire: **ALPAO**
**38330 Montbonnot-Saint-Martin (FR)**

(72) Inventeurs:
• **CAMET, Sébastien, Marin, Michel**
**F-38240 Meylan (FR)**
• **CURIS, Jean-François, Yves**
**F-38420 Domène (FR)**
• **ROOMS, Frédéric, Christian, Robert**
**F-38330 Biviers (FR)**

(74) Mandataire: **Cabinet Didier Martin et al**
**Les Terrasses des Bruyères - Bâtiment C**
**314 C, Allée des Noisetiers**
**69760 Limonest (FR)**

(56) Documents cités:
**WO-A1-2004/057407 JP-A- 8 248 214**
**US-A- 4 679 915 US-A- 5 535 043**
**US-A- 5 751 503 US-A1- 2003 030 922**

**Description**

DOMAINE TECHNIQUE

La présente invention se rapporte au domaine général des miroirs déformables utilisés dans les systèmes optiques adaptatifs, pour des applications aussi diverses que l'astronomie, la médecine, notamment l'ophtalmologie, les télécommunications, la métrologie, etc.

La présente invention se rapporte plus particulièrement à un miroir déformable comportant une membrane déformable possédant une face réfléchissante, ladite membrane étant montée sur un support pourvu d'au moins un actionneur conçu pour déformer ladite membrane, ledit actionneur comprenant au moins un organe mobile fixé à la membrane par un joint de colle.

La présente invention concerne également un procédé de fabrication d'un miroir déformable comprenant une membrane déformable présentant une face réfléchissante, au cours duquel on fixe par collage sur ladite membrane un organe mobile d'actionneur conçu pour déformer localement ladite membrane.

TECHNIQUE ANTERIEURE

Il est connu d'employer des miroirs déformables afin de corriger les irrégularités du front d'onde d'un faisceau lumineux.

A cet effet, de tels miroirs déformables sont pourvus d'une surface réfléchissante souple, généralement formée par une membrane, au dos de laquelle sont reliés des actionneurs capables de manoeuvrer localement la membrane en avance ou en retrait, et ainsi de modifier le chemin optique parcouru par les différents rayons constituant le faisceau qui se réfléchit sur ladite membrane. Il est ainsi possible de compenser les déphasages à l'origine de la déformation du front d'onde.

Les actionneurs peuvent notamment être de type électromagnétique, et comporter alors des organes mobiles de type aimants permanents qui sont fixés à la membrane et pilotés à distance par des bobines fixes solidaires du support.

S'ils procurent des avantages indéniables, les miroirs déformables connus peuvent toutefois présenter certains inconvénients, qui résultent notamment de l'assemblage des organes mobiles des actionneurs sur la membrane.

En effet, un tel assemblage, qui est généralement effectué par collage, peut affecter localement les propriétés de la membrane, aussi bien en termes de rigidité, de fréquence de résonance, que d'état de surface, et ainsi amoindrir les performances du miroir.

Afin de limiter les conséquences de l'assemblage des actionneurs sur la qualité globale du miroir, il a notamment été envisagé de conserver une membrane relativement épaisse.

Toutefois, plus la membrane est épaisse, plus elle est rigide, si bien qu'une telle solution limite globalement la capacité de ladite membrane à se déformer. En pareil cas, il peut donc être nécessaire de mettre en oeuvre des actionneurs relativement lourds et encombrants.

En outre, une forte épaisseur tend plus particulièrement à limiter la capacité de ladite membrane à se déformer de manière essentiellement localisée, dans la mesure où il est difficile de contrôler finement et de manière nettement différenciée la déformation de plusieurs points de la face réfléchissante situés au voisinage immédiat l'un de l'autre. Une membrane épaisse possède par conséquent une résolution spatiale relativement limitée.

Par ailleurs, il a également été envisagé d'enduire l'ensemble de la face cachée de la membrane d'une couche de colle uniforme sur laquelle viennent adhérer les organes mobiles des actionneurs.

Toutefois, une telle solution présente l'inconvénient d'augmenter la masse de la membrane en mouvement et d'abaisser sa fréquence de résonance, ce qui contraint à limiter sa vitesse d'asservissement au préjudice de la réactivité du miroir.

En outre, l'enduction de l'ensemble de la membrane par une couche de colle continue, peut créer une sorte de bilame dont le comportement thermique peut rendre le miroir sujet à une certaine instabilité ou à des phénomènes de dérive.

Par ailleurs, les inventeurs ont constaté que, quelle que soit la solution envisagée, les miroirs obtenus par les procédés de fabrication connus présentaient toujours des irrégularités de surface, la mise en place des actionneurs induisant un bosselage de la surface réfléchissante. Or, ce phénomène, connu sous le nom d' « *empreinte* » ou « *print through* », peut bien entendu s'avérer problématique lorsque le miroir est destiné à une application de haute précision. Le document JP 8-248214 montre un miroir déformable selon l'état de la technique.

EXPOSE DE L'INVENTION

Les objets assignés à l'invention visent par conséquent à remédier aux différents inconvénients susmentionnés et à proposer un nouveau miroir déformable dont la qualité, la précision et l'état de surface soient améliorés.

Un autre objet assigné à l'invention vise à proposer un nouveau miroir déformable dont la structure soit relativement simple.

Un autre objet assigné à l'invention vise à proposer un nouveau miroir déformable dont la fabrication et l'assemblage sont simplifiés et moins onéreux que la fabrication et l'assemblage des miroirs déformables connus.

Un autre objet assigné à l'invention vise à proposer un nouveau miroir déformable dont le comportement soit particulièrement homogène, reproductible, précis, et stable.

Un autre objet assigné à l'invention vise à proposer un nouveau miroir déformable qui soit particulièrement robuste et qui présente une bonne longévité.

Un autre objet assigné à l'invention vise à proposer un nouveau miroir déformable qui tolère un asservissement particulièrement rapide et qui présente une bonne réactivité.

Un autre objet assigné à l'invention vise à proposer un miroir déformable, notamment de type micro-miroir, dont les organes en mouvement, et notamment la membrane, sont particulièrement légers.

Un autre objet assigné à l'invention vise à proposer un nouveau procédé de fabrication d'un miroir déformable qui soit particulièrement simple à mettre en oeuvre et qui permette d'obtenir un miroir de qualité optimisée, présentant notamment un excellent état de surface.

Un autre objet assigné à l'invention vise à proposer un procédé de fabrication d'un miroir déformable par collage qui soit relativement simple et rapide à mettre en oeuvre, et qui minimise la quantité de colle utilisée.

Les objets assignés à l'invention sont atteints à l'aide d'un miroir déformable conforme à l'objet de la revendication 1.

Les objets assignés à l'invention sont également atteints à l'aide d'un procédé de fabrication d'un miroir déformable conforme à l'objet de la revendication 18.

DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :

- La figure 1 illustre, selon une vue en perspective écorchée, une première variante de réalisation d'un miroir déformable conforme à l'invention.

- Les figures 2 et 3 illustrent, selon des vues partielles de côté en coupe, une seconde et une troisième variante de réalisation de miroirs déformables conformes à l'invention.

- La figure 4 illustre, selon une vue schématique de côté en coupe, une jonction par collage entre des organes mobiles et une membrane au sein d'un miroir conforme à l'invention.

- Les figures 5A, 5B, 5C, 5D, et 5E illustrent, selon des vues partielles de côté en coupe, différentes variantes de réalisation de parties actives sur des organes mobiles d'actionneurs conformes à l'invention.

- La figure 6 illustre, selon une vue de côté, une variante de réalisation d'organe mobile d'actionneur conforme à l'invention.

MEILLEURE MANIERE DE REALISER L'INVENTION

La présente invention se rapporte à un miroir déformable 1, et plus particulièrement à un miroir déformable 1 destiné à modifier, et en particulier à rectifier, un front d'onde dans une application optique quelconque, par exemple dans le domaine de l'astronomie, de la médecine, et plus particulièrement de l'ophtalmologie, des télécommunications, de la métrologie etc.

A cet effet, le miroir déformable 1 comporte une membrane 2 déformable qui possède une face réfléchissante 3 destinée à réfléchir le faisceau lumineux incident, ainsi qu'une face opposée, dite « face cachée » 4.

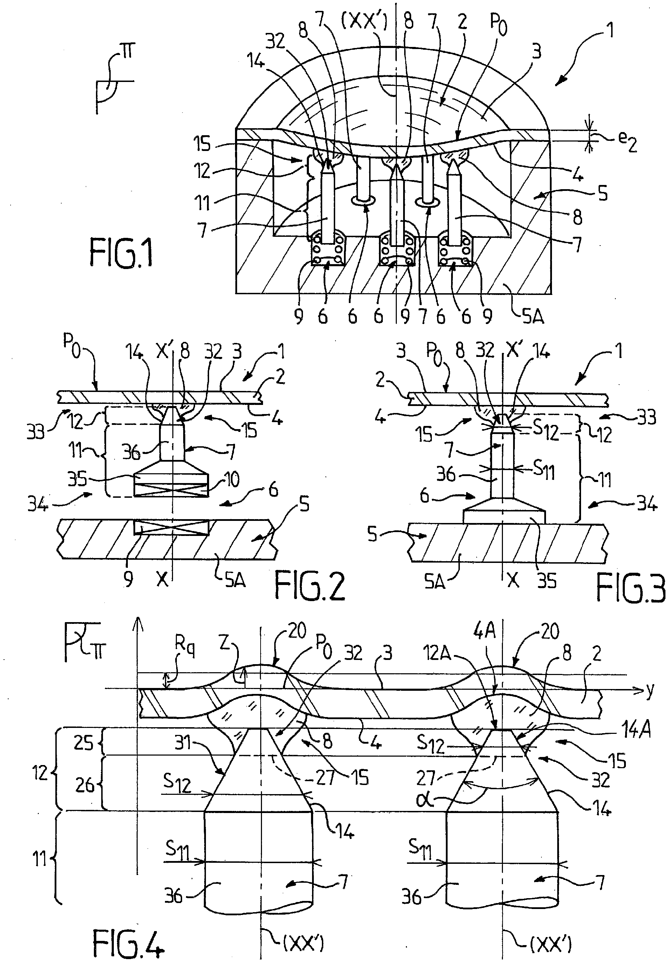

La membrane 2 est montée sur un support 5, de préférence rigide, qui peut former un boîtier creux recouvert par ladite membrane 2, tel que cela est illustré sur la figure 1.

Bien entendu, le matériau constitutif de la membrane 2, ainsi que l'épaisseur $e_2$ de cette dernière seront choisis notamment pour conférer à ladite membrane 2 la souplesse nécessaire, tout en respectant les contraintes liées au seuil de fréquence de résonance.

A ce titre, ladite membrane pourra être réalisée dans un film polymère ou encore par une fine nappe de silicium, et pourra présenter une épaisseur inférieure ou égale à 50 $\mu$m, de préférence inférieure ou égale à 10 $\mu$m, voire sensiblement comprise entre 3 $\mu$m et 5 $\mu$m.

De préférence, l'épaisseur $e_2$ de ladite membrane est sensiblement constante, de telle sorte que la face réfléchissante 3 et la face cachée 4 sont sensiblement parallèles.

De même, la face réfléchissante 3 et/ou la face cachée 4 seront de préférence sensiblement régulières et lisses, dépourvues de reliefs ou d'aspérités, ce qui permet notamment de simplifier la réalisation de la membrane 2.

Bien entendu, le profil moyen $P_0$ idéal de ladite membrane 2, et plus particulièrement de la face réfléchissante 3, pourra être quelconque.

A titre d'exemple, ledit profil moyen $P_0$, considéré de préférence au repos dans le plan sagittal $\pi$ du miroir déformable 1, pourra être sensiblement rectiligne, de telle sorte que la face réfléchissante sera sensiblement plane, tel que cela est représenté sur les figures 2, 3 et 4.

Ledit profil moyen $P_0$ pourra également être légèrement, et de préférence régulièrement, incurvé, de telle sorte que la face réfléchissante 3 présente un profil bombé, de préférence concave, et par exemple forme une sorte de coupelle de type calotte sphérique, telle qu'illustrée sur la figure 1, ou parabolique.

Sur les figures, l'axe optique central du miroir 1, qui constitue de préférence son axe de révolution, s'étend sensiblement parallèlement à la direction verticale.

Par ailleurs, le contour délimitant latéralement la membrane 2 ainsi que le support 5 pourra être de forme quelconque, mais correspondra de préférence à un polygone régulier ou à un cercle, le miroir se présentant alors sensiblement sous la forme d'un cylindre, voire d'un disque tel que cela est illustré sur la figure 1.

Selon l'invention, le support 5 est pourvu d'au moins un actionneur 6 conçu pour déformer ladite membrane 2, ledit actionneur comprenant à cet effet au moins un organe mobile 7 fixé à la membrane 2 par un joint de colle 8.

De préférence, le miroir 1 comporte une pluralité d'actionneurs 6, de préférence de structure et de dimensions sensiblement identiques, et par conséquent une pluralité d'organes mobiles 7 indépendants les uns des autres et tous reliés à la membrane déformable 2.

De façon particulièrement préférentielle, les actionneurs sont répartis, à l'intérieur du contour latéral de la membrane, et plus particulièrement logés dans le boîtier délimité par le support, selon les noeuds d'un réseau de mailles régulières, par exemple sensiblement carrées ou hexagonales, de telle sorte que lesdits actionneurs 6, et plus particulièrement les organes mobiles 7 associés, quadrillent la membrane 2 en la divisant ainsi en une matrice dont on peut avantageusement contrôler le déplacement de chaque cellule individuellement.

A titre d'exemple, un miroir dont la membrane 2 présentera un diamètre d'environ 15 mm pourra comporter cinquante-deux actionneurs 6.

De préférence, tel que cela est illustré sur les figures, les organes mobiles 7 seront agencés pour se déplacer, et entraîner localement la membrane 2 en déplacement, sensiblement en translation, selon une direction sensiblement perpendiculaire au profil moyen $P_0$ de la face réfléchissante, et plus particulièrement de bas en haut et inversement selon une direction sensiblement verticale sur les figures 1 à 3 et 5A à 5F.

Selon une variante de réalisation non représentée, plusieurs joints de colle 8, voire l'ensemble des joints de colle 8, peuvent être reliés les uns aux autres de sorte à former une couche sensiblement continue et homogène recouvrant largement, voire entièrement, la face cachée 4 de la membrane 2.

Toutefois, de façon particulièrement préférentielle, les organes mobiles 7 seront reliés à la membrane déformable 2 respectivement par une pluralité de joints de colle 8 qui sont séparés les uns des autres.

Avantageusement, on pourra ainsi fixer individuellement chacun desdits organes mobiles 7 au moyen d'une seule goutte de colle isolée de faible volume, ce qui permet non seulement de limiter la quantité de colle nécessaire à l'assemblage, mais également de gagner en précision d'assemblage, en légèreté de l'ensemble ainsi réalisé, et d'améliorer l'état de surface tel que cela sera décrit plus loin.

De surcroît, la réalisation de jonctions 15 individuelles et sensiblement ponctuelles entre organes mobiles 7 et membrane 2 permet au besoin de séparer un organe mobile 7 de ladite membrane sans dégrader cette dernière, afin par exemple de remplacer facilement un ou plusieurs organes mobiles 7 défectueux, ce qui est délicat, sinon impossible, dans le cas ou l'on réalise une liaison particulièrement forte au moyen d'une couche de colle continue.

On remarquera en outre que la minimisation de la quantité de colle permet avantageusement de limiter considérablement les effets de dégazage qui peuvent éventuellement être observés lorsque le miroir est utilisé dans une application sous basse pression, et notamment « sous vide », par exemple au sein d'un cryostat.

Bien entendu, des qualités de la colle et notamment sa raideur, sa viscosité, son temps de séchage, son comportement thermique etc. seront adaptés à l'application visée. A ce titre, le joint de colle 8 sera de préférence réalisé à l'aide d'une colle de type élastomère, par exemple du genre silicone.

De surcroît, tel que cela est illustré sur les figures, le joint de colle 18 réalisera de préférence un assemblage direct entre l'actionneur 6 et la membrane 2, et plus particulièrement entre l'organe mobile 7 et la face cachée 4, en venant mouiller spontanément et sensiblement librement ces deux éléments.

Par ailleurs, il est remarquable que l'invention n'est nullement limitée à un type particulier d'actionneur 6, et peut notamment mettre en oeuvre, pour provoquer et contrôler le déplacement de l'organe mobile 7, et par conséquent l'éloignement ou le rapprochement de la membrane 2 par rapport au fond 5A du support 5, tout type de technologie susceptible de créer un mouvement, une déformation ou une dilatation, par exemple d'origine mécanique, électrique, électromagnétique, piézo-électrique, pneumatique, hydraulique, thermique, etc.

A ce titre, l'actionneur 6 pourra par exemple comprendre un organe fixe 9, solidaire du support 5, et de préférence inséré dans un logement prévu à cet effet dans le fond 5A dudit support 5, de sorte à former un organe de propulsion de l'organe mobile 7, ce dernier étant distinct dudit organe fixe 9 et monté librement mobile par rapport à celui-ci.

Ainsi, selon la première variante de réalisation illustrée sur la figure 1, l'organe fixe 9 pourra être formé par un inducteur électromagnétique de type bobine, tandis que l'organe mobile 7 sera formé par un noyau mobile ferromagnétique apte à se déplacer le long de l'axe générateur dudit solénoïde.

Selon la seconde variante de réalisation illustrée sur la figure 2, l'organe fixe 9 pourra être formé par un électroaimant permettant de piloter l'intensité et la polarité du champ magnétique appliqué à l'organe mobile 7, lui-même constitué d'un matériau ferromagnétique ou pourvu à sa base d'un aimant permanent 10 se présentant par exemple sous la forme d'une pastille.

Bien entendu, il est également parfaitement envisageable que l'organe mobile 7 puisse constituer la tige d'un vérin pneumatique, hydraulique, à vis etc.

A l'inverse, selon une troisième variante de réalisation illustrée sur la figure 3, l'actionneur 6 pourra être formé par une colonne de hauteur ajustable reliant directement le fond 5A du support 5 à la membrane 2, à la manière d'une entretoise.

Ladite colonne peut avantageusement comprendre au moins un tronçon réalisé dans un matériau piézo-électrique, sinon être formée intégralement dans barreau piézo-électrique, de telle sorte que l'on puisse modifier et contrôler sa hauteur, et par conséquent la distance séparant la membrane 2 du fond 5A, en provoquant la dilatation, ou, alternativement, la contraction, longitudinale intrinsèque dudit matériau piézo-électrique.

Selon une caractéristique importante de l'invention, l'organe mobile 7 possède un corps principal 11, situé hors du joint de colle 8, ledit corps principal 11 se prolongeant par une partie active 12 qui pénètre en tout ou partie dans ledit joint de colle 8, de telle sorte que la colle adhère sur la paroi latérale 14 de ladite partie active 12 pour assurer une jonction 15 entre l'organe mobile 7 et la membrane 2.

Par « *paroi latérale* » 14, on désigne l'élément de paroi externe qui délimite latéralement la partie active 12 en s'étendant depuis le corps principal 11 jusqu'à l'extrémité libre 12A de ladite partie active 12 la plus éloignée dudit corps principal, ladite extrémité libre étant quant à elle située dans le joint de colle 8, à proximité la membrane 2.

En d'autres termes, l'organe mobile 7, et plus particulièrement la partie active 12, s'étend de préférence sensiblement selon une ligne moyenne (XX') qui joint le corps principal 11 à l'extrémité libre 12A de la partie active 12, ladite ligne moyenne correspondant sensiblement à la direction générale selon laquelle ladite partie active 12 aborde la membrane 2 et pénètre dans le joint de colle 8, tandis que la paroi latérale 14 correspond à la surface qui s'enroule et se referme autour de ladite ligne moyenne (XX') afin de marquer la limite transversale de la partie active 12 par rapport à ladite ligne moyenne (XX').

Avantageusement, le mouillage par la colle d'au moins une partie de la paroi latérale 14 optimise la superficie et la répartition de ladite colle sur la partie active 12, ce qui garantit une bonne adhérence et permet ainsi de consolider l'ancrage de l'organe mobile 7 à la membrane 2.

En particulier, une telle disposition permet de ne pas limiter la jonction 15 à une simple prise en bout, dans laquelle le joint de colle 8 formerait une pellicule confinée, sans débordement, dans un espace compris entre la face cachée 4 de la membrane 2 et la seule paroi supérieure délimitant l'extrémité libre 12A de la partie active.

Tel que cela sera détaillé plus loin, il est ainsi possible de réaliser une jonction 15 particulièrement robuste et fiable, y compris et surtout lorsque la superficie de la paroi supérieure de la partie active 12, qui est située en vis-à-vis de la membrane 2, est particulièrement restreinte, voire sensiblement ponctuelle et nulle.

De préférence, la ligne moyenne (XX') peut être sensiblement parallèle à l'axe optique du miroir 1, et plus particulièrement sensiblement perpendiculaire à la membrane 2, tel que cela est illustré sur les figures.

En outre, l'organe mobile 7, et plus particulièrement son corps principal 11, est de préférence formé par une tige, qui se présente préférentiellement sensiblement sous la forme d'un cylindre, de préférence de base circulaire, et qui s'étend préférentiellement de façon sensiblement rectiligne selon ladite ligne moyenne (XX'), dite « *axe générateur* ».

Selon l'invention, le joint de colle 8 d'une part adhère à, et s'étale sur, la face cachée 4 sensiblement parallèle à la face réfléchissante 3, et d'autre part adhère (au moins) à la paroi latérale 14 de l'organe mobile qui s'étend quant à elle selon une direction sensiblement transverse, voire normale, à ladite face cachée 4.

Ainsi, il est possible de réunir l'organe mobile 7 et la membrane 2 par le dépôt d'un joint de colle (sous forme d'une couche ou même d'un simple point) entre d'une part la partie active 12 de l'organe mobile 7 et d'autre part la face cachée 4 de la membrane 2 qui se présente de façon transversale, voire sensiblement perpendiculaire, à l'axe générateur (XX') dudit organe mobile selon lequel ce dernier sollicite la membrane en déplacement.

Les inventeurs ont en effet constaté qu'il était possible d'obtenir une jonction 15 à la fois simple, suffisamment robuste, et présentant une faible empreinte de collage, en mouillant conjointement, même librement, à l'aide d'un même joint de colle 8, au moins deux surfaces d'encollage 4A, 14A, dont une première surface d'encollage 14A spécialement profilée appartenant à la paroi latérale 14 de la partie active 12 de l'organe mobile 7, permettant de contrôler, et plus particulièrement de limiter, le degré de mouillage tel que cela sera détaillé ci-après, et une seconde surface d'encollage 4A qui forme une portion de la face cachée 4 et que l'organe mobile 7 aborde transversalement, et notamment sensiblement perpendiculairement, ladite seconde surface d'encollage 4A pouvant avantageusement se présenter sensiblement « *à plat* », de manière lisse et régulière, en vis-à-vis du bout dudit organe mobile et de manière sensiblement normale à l'axe générateur (XX') de ce dernier sans que cela n'affaiblisse ou n'amoindrisse les performances du collage.

De préférence, l'organe mobile 7, et plus particulièrement la tige, est réalisé d'un seul tenant dans un matériau rigide, et notamment suffisamment rigide en comparaison des efforts à fournir pour déformer la membrane 2 selon une course fonctionnelle suffisante, laquelle est verticale sur les figures.

Chaque actionneur 6 pourra ainsi avantageusement être pourvu d'un unique organe mobile 7 monolithique.

En outre, il conviendra que ledit matériau, et plus globalement l'organe mobile 7, soit léger et usinable facilement, à moindre coût.

A titre d'exemple, une telle tige pourra être réalisée à partir d'un jonc composite de type fibre de carbone/matrice époxy, en fibre de verre, ou en matériau métallique.

Selon une autre caractéristique importante de l'invention, la partie active 12 présente une section transverse $S_{12}$, délimitée par la paroi latérale 14, qui se différencie de la section transverse $S_{11}$ du corps principal 11.

Par « *section transverse* », on désigne la section de l'organe mobile 7, et plus particulièrement la section de la partie active 12, respectivement du corps principal 11, considérée transversalement à ligne moyenne d'extension dudit organe mobile 7, ladite ligne moyenne allant du corps principal jusqu'à l'extrémité de la partie active 12.

Lorsque l'organe mobile est formé par une tige d'axe générateur (XX'), les sections transverses correspondent aux sections planes mesurées sensiblement perpendiculairement à cet axe générateur, lequel correspond par ailleurs de préférence sensiblement à la direction générale selon laquelle l'organe mobile 7 aborde la membrane 2, pénètre dans le joint de colle, et est susceptible de se déplacer.

De façon particulièrement avantageuse, l'agencement différencié de l'organe mobile 7 conforme à l'invention permet d'améliorer significativement l'état de surface de la face réfléchissante 3, de telle sorte que la surface réelle de ladite face réfléchissante 3 se rapproche sensiblement du profil moyen $P_0$ idéal que l'on souhaite - au moins en théorie - conférer à cette dernière.

En effet, les inventeurs ont constaté qu'en réalisant des miroirs à l'aide d'organes mobiles connus, on générait un bosselage non négligeable de la face réfléchissante 3, du fait que chaque organe mobile 7 imprimait une empreinte au niveau de ladite face réfléchissante, mais qu'il était possible d'atténuer ce phénomène en conférant auxdits organes mobiles, et plus particulièrement à leur partie active, une forme spécifiquement étudiée.

Plus particulièrement, les inventeurs ont constaté, que, lors du mouillage de l'extrémité d'un organe mobile 7 par la colle, cette dernière avait tendance à remonter le long dudit organe par capillarité en formant un ménisque qui avait pour effet de générer des contraintes entre ledit organe mobile 7 et la face cachée 4 sur laquelle est disposée la colle.

Or, ces contraintes peuvent être à l'origine d'un phénomène de contraction, ou de rétreinte, qui provoque la flexion locale de la membrane 2, cette dernière ayant tendance à se resserrer autour de l'extrémité de l'organe mobile 7 qui est noyée dans la colle.

L'assemblage des organes mobiles connus à la membrane avait donc pour effet, jusqu'ici, d'incurver localement ladite membrane en y imprimant une bosse 20, sensiblement au droit de chaque organe mobile.

A l'inverse, tel que cela est illustré sur la figure 4, l'agencement spécifique du miroir 1 et de l'organe mobile 7 conformes à l'invention, et plus particulièrement le profilage particulier de la partie active 12, permet avantageusement de limiter l'empreinte induite par la jonction 15 sur la face réfléchissante 3 du miroir 1, et plus particulièrement d'atténuer ledit effet d'empreinte en réduisant l'amplitude des éventuelles bosses 20 qui altèrent la qualité de l'état de surface de la membrane 2, et plus particulièrement de la face réfléchissante 3.

Plus particulièrement, il a été constaté que l'éventuelle empreinte résiduelle résultant de l'assemblage conforme à l'invention est bien moindre que celle laissée par un organe mobile dont la section transverse serait relativement large et invariante depuis le corps principal 11 jusqu'à l'extrémité baignant dans la colle.

Avantageusement, l'invention permet donc de contrôler finement le mouillage de l'organe mobile 7, et plus particulièrement de la partie active 12 afin de ne pas générer d'aspérités importantes sur la face réfléchissante 3.

En outre, une telle disposition différenciant le corps principal 11 de la partie active 12 par leur géométrie et leurs dimensions permet, tout en préservant sensiblement la face réfléchissante 3 du phénomène d'empreinte, de conserver un corps principal 11 renforcé, de dimensions et notamment de section transverse relativement importante, qui présente par conséquent une excellente rigidité et plus particulièrement une bonne raideur en traction comme en compression.

A titre d'exemple, le corps principal peut notamment présenter un diamètre supérieur ou égal à 200 $\mu$m, et de préférence sensiblement compris entre 200 $\mu$m et 400 $\mu$m.

On peut ainsi assurer une transmission de mouvement plus fiable, rapide et reproductible, entre l'organe fixe 9, et plus particulièrement le support 5, et la membrane 2 reliée à l'organe mobile 7.

Le miroir 1 peut donc gagner en fiabilité et en rapidité, sans souffrir d'instabilité ou d'erreur d'asservissement dynamique.

Dans ce qui suit, par commodité de description, on désignera par « *portion immergée* » 25 la portion de l'organe mobile 7, et plus particulièrement de la partie active 12, qui est noyée dans le joint de colle 8, et par « *portion émergente* » 26, la portion de l'organe mobile 7, et plus particulièrement, le cas échéant, de la partie active 12, qui est située hors du joint de colle 8, sensiblement à l'opposé de la membrane 2, et qui baigne de préférence dans l'atmosphère elle-même confinée à l'intérieur du boîtier que délimitent le support 5 et la membrane 2.

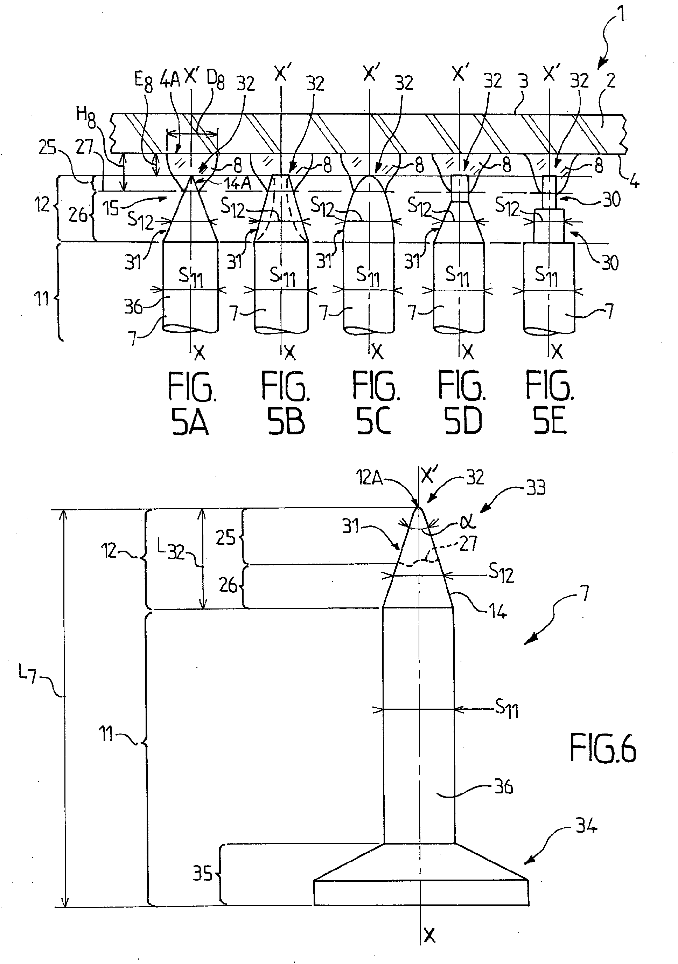

En pratique, c'est donc l'interface colle-atmosphère 27 qui marque la séparation entre ladite portion émergente 26 et la portion immergée 25 de la partie active 12, cette séparation se matérialisant sur la face latérale 14 par une ligne de mouillage représentée en pointillés sur les figures 4 et 6.

Selon une possibilité de réalisation, le changement de section transverse entre le corps principal 11 et la partie active 12 peut intervenir au moins en partie, sinon en totalité, dans la portion émergente 26 de l'organe mobile 7, c'est-à-dire en dehors du joint de colle 8, tel que cela est le cas par exemple sur les figures 5D, 5E. En d'autres termes, la variation de section transverse affectant la partie active 12 peut être localisée hors du joint de colle.

La section transverse $S_{12}$ de la partie active 12, bien que modifiée par rapport à celle du corps principal 11, peut alors se prolonger de façon sensiblement constante depuis la portion émergente 26 jusqu'à la portion immergée 25 comprise, tel que cela est le cas sur ces mêmes figures 5D, 5E.

Toutefois, selon une autre possibilité de réalisation préférentielle, correspondant par exemple aux figures 5A, 5B, 5C, la portion immergée 25 de la partie active 12, noyée dans le joint de colle 8, présente au moins une variation dimensionnelle de sa section transverse $S_{12}$.

En d'autres termes, la partie active 12 présente de préférence au moins une variation, voire plusieurs variations successives, de sa section transverse $S_{12}$, et plus particulièrement de la superficie de cette dernière, le long de sa portion immergée 25, c'est-à-dire dans l'espace compris entre l'interface colle-atmosphère 27 et l'extrémité libre de ladite partie active 12 située au voisinage de, voire sensiblement contre, la face cachée 4.

Bien entendu, la nature de la variation dimensionnelle de la section transverse $S_{12}$ de la partie active 12 n'est nullement limitée, et peut notamment consister en un rétrécissement, c'est-à-dire en une réduction de la distance à l'axe générateur (XX') de tout ou partie des points formant le contour de la paroi latérale 14, ou au contraire en un élargissement, et plus particulièrement une augmentation de la distance à l'axe générateur (XX') de ladite paroi latérale 14.

Il est également parfaitement envisageable que la partie active 12 présente plusieurs variations successives de sa section transverse $S_{12}$, sensiblement étagées le long dudit axe générateur (XX').

Ainsi, selon une variante de réalisation non représentée, la paroi latérale 14 pourra former un collet saillant, et/ou au contraire une gorge rentrante sensiblement annulaire, de préférence destinés l'un comme l'autre à être recouverts par le joint de colle 8.

Par ailleurs, il est envisageable que la ou les variations de la section transverse $S_{12}$ de la partie active 12 soi(en)t formée(s) par un ou plusieurs décrochements 30 abrupts, de type épaulements, tel que cela est illustré notamment sur la figure 5E.

Toutefois, la partie active 12 présentera de préférence un tronçon de transition 31 le long duquel sa section transverse $S_{12}$ varie progressivement.

Avantageusement, on peut réaliser ainsi, notamment en incurvant et ou en inclinant la paroi latérale 14 de la partie active 12, par rapport à la paroi latérale du corps principal 11 et/ou par rapport à l'axe générateur (XX'), une variation de section progressive, sensiblement continue et douce, qui s'étend longitudinalement sur une distance non ponctuelle le long dudit l'axe générateur (XX').

De préférence, ledit tronçon de transition 31 s'étendra sur la majorité, voire sur la totalité de la longueur de la partie active 12, tel que cela est illustré notamment sur les figures 5A, 5B et 5C, ledit tronçon de transition 31 pouvant être unique et monotone, c'est-à-dire exclusivement dédié au rétrécissement ou au contraire à l'élargissement de la section transverse $S_{12}$.

De préférence, tel que cela est illustré sur les figures 5A, 5B et 5C, le tronçon de transition 31 s'étend de part et d'autre de l'interface colle-atmosphère 27, c'est-à-dire que la variation de section transverse $S_{12}$ amorcée dans la portion émergente 26 se prolonge avantageusement jusque dans la portion immergée 25 et à travers cette dernière, le tronçon de transition 31 étant réparti à la fois sur la portion émergente 26 et sur la portion immergée 25.

Bien entendu, cette disposition dépendra des caractéristiques géométriques et dimensionnelles de l'organe mobile 7, et plus particulièrement du profil de la partie active 12, ainsi que de la quantité de colle utilisée pour former le joint de colle 8 ainsi que du degré d'enfoncement, c'est-à-dire de pénétration, de la partie active 12 dans ledit joint de colle.

De façon particulièrement préférentielle, la section transverse $S_{12}$ de la partie active 12 varie de sorte à présenter au moins un rétrécissement, tel que cela est représenté sur l'ensemble des figures.

Plus particulièrement, selon une variante de réalisation préférentielle qui peut constituer une invention en tant que telle, la partie active 12 peut aller en s'affinant progressivement de sorte à former, selon l'invention, une pointe 32 à la première extrémité 33 de l'organe mobile 7.

En d'autres termes, la partie active 12 présente de préférence un rétrécissement terminal, de telle sorte que l'extrémité de l'organe mobile 7 va en diminuant, sa section transverse étant globalement décroissante, en particulier par rapport à la section transverse $S_{11}$ du corps principal qui la précède.

Ainsi, la paroi latérale 14 tend de préférence à se rabattre progressivement et à converger vers l'axe générateur (XX'), dans le sens de pénétration de la partie active 12 dans le joint de colle 8, de telle sorte que ladite partie active 12 peut constituer un embout profilé de pénétration et de mouillage, dont la section transverse $S_{12}$ réduit au fur et à mesure que l'on s'approche de la face cachée 4, et dont la forme peut notamment rappeler celle d'un coin.

Cette convergence, sensiblement totale ou tronquée, est de préférence réalisée au moyen d'un profil sensiblement continu, formant un tronçon de transition 31 tel que décrit plus haut, ledit profil sensiblement continu pouvant être notamment rectiligne, tel que cela est illustré en traits pleins sur les figures 5A, 5B, ou au contraire incurvé, et notamment convexe, c'est-à-dire bombé vers l'extérieur, tel que cela est illustré dans la figure 5C, ou concave, tel que cela est illustré en traits pointillés sur la figure 5B.

Plus particulièrement, la pointe 32 pourra présenter une forme sensiblement conique, tel que cela est illustré sur les figures 1, 5A et 6, sensiblement tronconique, tel que cela est illustré sur les figures 2, 3, 4, et 5B, arrondie en dôme, notamment en dôme sensiblement parabolique, tel que cela est illustré sur la figure 5C, en ogive, ou encore hyperboloïde, tel que cela est illustré en pointillés sur la figure 5B.

Afin de simplifier l'usinage de parties actives particulièrement fines, tout en préservant la solidité ces dernières, on privilégiera de préférence les pointes tronconiques ou en dôme.

En outre, l'extrémité libre 12A de la pointe 32 pourra être avantageusement émoussée, aplanie ou arrondie, par exemple par polissage.

Par ailleurs, la convergence de la pointe peut également être réalisée de manière discrète, au moyen d'un ou plusieurs décrochements 30, de préférence sensiblement concentriques et agencés en gradins, de sorte à former une pointe de type téton, dont les contours peuvent par exemple s'inscrire sensiblement dans une enveloppe fictive sensiblement tronconique ou en ogive.

Ainsi, il n'est pas exclu que la pointe puisse notamment présenter la forme d'un cylindre de section sensiblement constante et plus étroite que celle du corps principal 11, et de façon préférentielle comporter au moins deux cylindres concentriques successifs alignés par diamètre décroissant, chacun présentant un diamètre sensiblement constant et plus faible que le diamètre du cylindre qui le précède, tel que cela est illustré sur la figure 5E.

Bien entendu, la géométrie de la pointe 32 peut résulter de la combinaison d'un ou plusieurs profils tels que décrits plus haut.

Il est remarquable que le recours à des organes mobiles pointus permet de réaliser, entre chaque organe mobile 7 et la membrane 2, une liaison quasi-ponctuelle, du fait que la jonction 15, en particulier lorsqu'elle ne fait intervenir qu'un joint de colle 8 isolé et peu volumineux, n'occupe qu'une très faible superficie sur la face cachée.

A titre d'exemple, la surface de la membrane 2 occupée par la jonction 15, et plus particulièrement recouverte par la colle formant un joint 8 isolé, peut présenter une dimension transverse hors-tout $D_8$ strictement inférieure à 1 mm, et notamment inférieure ou égale à 600 $\mu$m.

Un tel assemblage quasi-ponctuel permet en outre aux organes mobiles de ne quasiment pas affecter les propriétés et le comportement de la membrane 2 au niveau des jonctions 15 et au voisinage de ces dernières, et plus particulièrement de suivre sensiblement sans l'altérer le profil $P_0$ au repos de ladite membrane, que celui-ci soit plan ou incurvé.

De préférence, la pointe 32 est unique, d'un seul tenant, et sensiblement centrée sur l'axe générateur (XX'), ladite pointe 32, plus globalement la partie active 12, et de manière plus générale l'ensemble de l'organe mobile 7 présentant préférentiellement une géométrie de révolution autour dudit axe générateur (XX').

Par ailleurs, la pointe 32 est enfoncée (seulement) partiellement dans le joint de colle 8.

En d'autres termes, la partie active 12, et plus particulièrement la pointe 32, peut n'être pas totalement noyée dans le joint de colle 8, de telle sorte que l'interface colle-atmosphère 27 se situe dans une zone intermédiaire de la pointe 32, sensiblement comprise entre la base large de la pointe, qui est reliée au corps principal 11, et l'extrémité libre affinée de ladite pointe 32, qui est orientée vers la membrane 2.

Avantageusement, une telle disposition permet de limiter d'une part les dimensions de la portion immergée 25, et plus particulièrement le diamètre de la section transverse de la partie active 12 dans ladite portion immergée, tout en maintenant d'autre part une superficie globale de paroi latérale 14 qui est suffisante pour assurer une bonne adhésion du joint de colle sur l'organe mobile 7, et ainsi un bon arrimage dudit organe mobile 7 à la membrane 2.

Un tel agencement permet notamment de limiter la quantité de colle nécessaire à la réalisation du joint 8, et de surcroît, de contrôler, et plus particulièrement de limiter, la remontée de la colle le long de la partie active 12, et par conséquent la formation et l'étendue d'un ménisque correspondant, ce qui contribue à une réduction significative des contraintes exercées par la jonction 15 sur la membrane 2, et par conséquent à l'atténuation de l'effet d'empreinte.

Afin de garantir l'émergence d'une portion de la pointe hors de la colle, ou par disposition constructive indépendante, on pourra prévoir que la longueur $L_{32}$ de la pointe 32, mesurée entre sa base et son extrémité libre, et qui coïncide de préférence avec la longueur de la partie active 12, est supérieure ou égale à la hauteur totale $H_8$ du joint de colle 8, ou « *hauteur de mouillage* », mesurée entre la face cachée 4 et l'interface colle-atmosphère 27.

Ladite hauteur totale $H_8$ du joint de colle 8 pourra notamment être sensiblement comprise entre 100 $\mu$m et 300 $\mu$m, et plus particulièrement voisine de 200 $\mu$m, tandis que la longueur $L_{32}$ de la pointe 32 pourra sensiblement être comprise entre 300 $\mu$m et 500 $\mu$m, et notamment voisine de 400 $\mu$m.

Ainsi, la colle mouillera de préférence la pointe 32 sensiblement à mi-hauteur de celle-ci, et plus particulièrement à mi-hauteur de la paroi latérale 14 et du tronçon de transition 31.

Ainsi, la jonction pourra présenter une structure sensiblement biconique, dont la forme rappelle celle d'un sablier, et comprenant un cône supérieur, souple, formé par le joint de colle 8 dont la base large adhère à la face cachée 4, lequel est relié à un cône inférieur, rigide, formé par la pointe 32 qui pénètre sensiblement dans ledit cône supérieur par le sommet de ce dernier.

De préférence, le ou les joints de colle 8 seront formés (chacun) par une goutte de colle dont la base large adhère à la face cachée 4 sensiblement parallèle à la face réfléchissante 3, et dans le sommet de laquelle pénètre la pointe 32.

Par ailleurs, une fois l'organe mobile 7 assemblé, l'extrémité libre 12A de la partie active, donc de la pointe 32, se situera avantageusement en retrait de la face cachée 4, par exemple à une distance d'environ 20 $\mu$m à 40 $\mu$m de celle-ci.

Ainsi, l'épaisseur résiduelle $E_8$ du joint de colle, compris entre la partie active 12, et plus particulièrement son extrémité libre 12A, et la membrane 2 et séparant ces dernières, sera de préférence inférieure ou égale à 50 $\mu$m, et de façon particulièrement préférentielle sensiblement comprise entre 20 $\mu$m et 30 $\mu$m.

Par ailleurs, l'angle au sommet a de la pointe 32, le cas échéant de l'enveloppe fictive dans laquelle s'inscrit sensiblement ladite pointe 32, sera de préférence compris sensiblement entre 15 degrés et 45 degrés et de préférence sensiblement voisin de 20 degrés à 30 degrés, voire de 40 degrés.

De façon particulièrement préférentielle, la rugosité quadratique Rq de la face réfléchissante 3, après jonction par collage de la membrane 2 avec le ou les organes mobiles 7, peut ainsi être inférieure ou égale à 7 nm (nanomètres), ou inférieure ou égale à 6 nm, de préférence inférieure ou égale à 5 nm, préférentiellement inférieure ou égale à 4 nm, voire inférieure ou égale à 3 nm.

Par « *rugosité quadratique Rq* », également appelée « *rugosité RMS* » pour « *Root Mean Square* », on désigne la mesure de rugosité effectuée selon la norme ISO 4287 et qui correspond à la formule suivante :

$$Rq = \sqrt{\frac{1}{L} \cdot \int_0^L Z^2(y) \cdot dy}$$

où L représente la longueur de base de profil sur laquelle est réalisée la mesure, selon la direction y, et Z(y) correspond à l'ordonnée des profils de rugosité, par rapport au profil moyen théorique $P_0$ considéré le long de ladite longueur de base.

Selon une variante de réalisation préférentielle, les valeurs de rugosité susmentionnées peuvent être atteintes sur une longueur de base de l'ordre d'au moins 15 mm, qui correspond de préférence au diamètre total de la membrane 2.

Par comparaison, les meilleures rugosités quadratiques obtenues jusqu'à présent pour des miroirs plans avec les procédés connus étaient de l'ordre de plus de 7 nm à 10 nm, soient des valeurs deux à trois fois supérieures.

La qualité, la résolution et la précision dudit miroir 1 conformes à l'invention sont donc grandement améliorées, l'état de surface « *brut* » de la face réfléchissante 3 du miroir 1 conforme à l'invention n'étant quasiment pas perturbé davantage par l'opération d'assemblage des organes mobiles.

En outre, les inventeurs ont constaté que les valeurs de rugosité jusqu'ici atteintes par les miroirs connus et considérées comme reflétant le meilleur résultat accessible, se dégradaient (c'est-à-dire augmentaient) très rapidement lorsque l'on essayait, au sein desdits miroirs connus, de conférer à la membrane 2 un profil globalement bombé, notamment parabolique.

Cette dégradation s'explique notamment par le fait que les organes mobiles, et plus particulièrement les disques aimantés, employés dans les dispositifs de l'art antérieur, présentent, en vis-à-vis de la membrane, une surface de contact relativement étendue, dont le diamètre avoisine 1 mm, et dont la raideur est très supérieure à la raideur propre de ladite membrane 2.

Par conséquent, les zones collées aux disques rigides étant incapables de fléchir, on peut assister, lorsque l'on cherche à incurver la membrane pour lui conférer un profil bombé, à une véritable segmentation de ladite membrane, et donc de la face réfléchissante, cette dernière ayant tendance à se fractionner en une succession de facettes relativement larges, sensiblement planes et inclinées les unes par rapport aux autres selon des lignes brisées, au lieu de conserver une courbure régulière.

A l'inverse, au sein du miroir conforme à l'invention, il est possible de réaliser une liaison quasi-ponctuelle entre chaque organe mobile 7 et la membrane 2, notamment au moyen d'une pointe 32 très fine coiffée d'une gouttelette de colle de faible diamètre, ce qui permet aux actionneurs d'épouser sensiblement le profil $P_0$ de la membrane, quel qu'il soit, sans interférer avec ce dernier, ni en particulier tendre à le « *redresser* » localement (hormis pour ce qui est des déformations volontaires contrôlées, nécessaires à la correction du front d'onde).

Ainsi, on peut en particulier éviter sensiblement l'apparition de plats sur la déformée de la membrane 2.

Avantageusement, les performances et l'état de surface du miroir 1 conforme à l'invention sont donc relativement peu sensibles à une mise en forme non plane de la membrane 2, notamment lorsque l'on confère à cette dernière un profil moyen théorique $P_0$ bombé, par exemple concave régulier, et en particulier sphérique ou parabolique.

Par ailleurs, la membrane 2 conservant sensiblement sa souplesse en tous points, et notamment à l'aplomb et au voisinage immédat des jonctions 15, il est possible de déformer localement ladite membrane 2, par rapport à son profil nominal au repos et dans la limite de sa souplesse intrinsèque, de façon particulièrement fine, précise et spatialement différenciée, ce qui améliore la résolution spatiale du miroir 1.

Bien entendu, l'invention peut concerner en temps que tel un miroir déformable possédant au moins un organe mobile 7 fixé par collage à la membrane 2 et dont le joint de colle 8 et l'organe mobile 7 sont choisis et agencés l'un par rapport à l'autre de telle sorte que la rugosité quadratique de la face réfléchissante 3 corresponde aux valeurs susmentionnées.

Par ailleurs, selon une caractéristique préférentielle qui peut constituer une invention à part entière, l'organe mobile 7 présente à sa seconde extrémité 34, opposée à la partie active 12, une embase 35 élargie, tel que cela est notamment illustré sur les figures 2, 3 et 6.

De préférence, ladite embase élargie 35 est reliée à la pointe 32 formant la partie active 12 par un tronc 36.

Avantageusement, tel que cela est notamment le cas sur la troisième variante de réalisation illustrée sur la figure 3, l'embase 35 peut avantageusement fournir un socle permettant à l'organe mobile 7 de reposer directement en contact contre le support 5, en profitant d'une bonne assise du fait que l'embase 35 forme une semelle de grande étendue et présentant une excellente planéité, de préférence sensiblement normale à l'axe générateur (XX').

Selon la seconde variante de réalisation illustrée sur la figure 2, ladite embase 35 fournit une surface de collage importante permettant d'accrocher, et plus particulièrement de suspendre, un aimant permanent 10 à la membrane 2, de préférence en suspension libre à distance de la face cachée et du fond 5A, par l'intermédiaire de l'organe mobile 7 qui forme alors une entretoise.

Avantageusement, une telle entretoise permet de déporter l'aimant en retrait de la membrane 2, et plus particulièrement de la jonction 15, et par conséquent de minimiser l'étendue des éléments rigides placés à proximité immédiate de ladite membrane. On peut ainsi réaliser une liaison qui reste essentiellement souple au voisinage immédiat de ladite membrane.

Plus particulièrement, on peut ainsi conserver un contact sensiblement ponctuel entre l'organe mobile 7 et la membrane 2 tout en utilisant un actionneur 6, et plus particulièrement un aimant 10, de dimensions relativement importantes, bien supérieures à celles de la jonction 15, et par conséquent puissant mais aussi facile à manipuler et à assembler.

De surcroît, lorsque l'aimant 10 est formé par un disque, le diamètre de l'embase 35 peut avantageusement être choisi sensiblement égal à celui dudit disque, ce qui facilite grandement le centrage relatif de l'aimant par rapport à l'organe mobile 7 et plus particulièrement à la pointe 32, notamment s'il est nécessaire de rapporter ledit aimant 10 pour le fixer contre, et par exemple le coller sous, ladite embase 35.

Selon une caractéristique préférentielle qui peut constituer une invention à part entière, quels que soient par ailleurs l'agencement du miroir, de l'organe mobile 7 et la nature ou l'agencement de la liaison entre ledit organe mobile 7 et la membrane 2, l'embase 35, voire l'organe mobile 7 dans son ensemble, peut être ferromagnétique.

Selon une variante de réalisation, une telle embase 35 ferromagnétique peut avantageusement être passivement attirée par l'aimant permanent 10 de telle sorte que le maintien dudit aimant 10 à ladite embase 35 soit assuré essentiellement, voire exclusivement, par adhérence magnétique.

L'embase 35 pourra être réalisée dans un matériau ferromagnétique massif, ou bien encore embarquer un matériau ferromagnétique se présentant par exemple sous la forme d'un revêtement enrobant partiellement ou totalement l'embase 35 et/ou la tige du corps principal 11, ledit revêtement pouvant être notamment réalisé par surmoulage, ou encore par lithographie et dépôt métallique.

Avantageusement, la force d'attraction magnétique exercée par l'aimant 10 sur l'embase 35 lorsque ledit aimant se trouve au plus près de la surface de réception de ladite embase, et de préférence au contact direct de cette dernière, pourra être choisie afin de présenter une valeur supérieure à celle de l'effort maximal de traction susceptible d'être exercé par l'actionneur 6 sur la membrane 2, de telle sorte qu'il n'est pas nécessaire de consolider la liaison embase/aimant par un moyen tierce, et plus particulièrement de telle sorte qu'il n'est pas nécessaire de recourir à un collage pour réunir ces deux éléments.

A ce titre, on pourra notamment définir une superficie idoine, suffisamment étendue, pour les surfaces de contact transverses de l'aimant et de l'embase qui viennent en vis-à-vis l'une de l'autre.

Ainsi, il est envisageable de simplifier grandement la structure et l'assemblage des actionneurs 6, et plus particulièrement de leurs parties mobiles, puisqu'il suffit de rapporter les aimants permanents 10 en les posant simplement contre leurs embases 35 respectives pour obtenir spontanément leur fixation par simple attraction magnétique.

En outre, on peut également obtenir, du fait de l'attraction magnétique, et le cas échéant en dimensionnant convenablement l'embase 35 et l'aimant 10, notamment en conférant à ces derniers des formes et des dimensions égales ou à tout le moins qui se correspondent sensiblement, un centrage automatique dudit aimant par rapport à ladite embase, ce qui simplifie l'opération d'assemblage et permet d'obtenir directement un actionneur bien équilibré.

De surcroît, la réversibilité d'un tel assemblage autorise au besoin un démontage facile et non destructif de l'actionneur 6, par séparation de l'aimant 10 de son embase 35, par exemple lorsqu'il est nécessaire de remplacer ou rééquilibrer un actionneur défectueux ou de corriger un assemblage incorrect. A ce titre, la conception modulaire conforme à l'invention permet au besoin de remplacer uniquement la pièce défectueuse, tout en récupérant la plupart des autres éléments en bon état afin de réutiliser ces derniers au sein du miroir, ce qui bien entendu permet de limiter le taux de rebut lors de la fabrication ou des opérations de maintenance.

Selon une alternative à cette variante, et tel que cela a été envisagé plus haut, l'organe mobile 7 peut être formé directement d'un seul tenant et dans un matériau ferromagnétique aimanté, avantageusement capable de conserver une aimantation permanente, de sorte à former intrinsèquement, selon une caractéristique préférentielle qui peut constituer une invention en tant que telle, un aimant permanent participant à l'actionnement de la membrane 2.

En d'autres termes, l'organe mobile 7 peut être formé par un aimant permanent monolithique qui est taillé en pointe de sorte à présenter d'une part un corps principal 11 et d'autre part une partie active 12, et plus particulièrement une pointe 32, selon l'un ou l'autre des agencements décrits plus haut.

Un tel organe mobile aimanté pourra être réalisé par toute technique appropriée, et par exemple par moulage ou frittage.

Ledit aimant permanent pourra avantageusement présenter en enfilade, le long de l'axe générateur (XX'), plusieurs tronçons de sections différentes réalisés continûment dans le même matériau ferromagnétique, et de préférence, tel que cela est représenté sur la figure 35, un tronçon terminal inférieur formant une embase 35 large, éventuellement un tronçon intermédiaire 36 formant un tronc cylindrique étroit, de diamètre inférieur à celui de ladite embase 35, qui peut remplir le rôle d'entretoise de déport par rapport à la membrane 2, et enfin un tronçon terminal supérieur formant une pointe 32 de fixation par laquelle ledit aimant est suspendu à ladite membrane.

Que l'aimant soit rapporté sur une tige ou qu'il soit partie intégrante de l'organe mobile 7, ce dernier permet avantageusement de suspendre à la membrane 2, et plus particulièrement à la face cachée 4, un aimant permanent 10 dont le diamètre est de préférence sensiblement égal à celui de l'embase 35.

Dans tous les cas, quelle que soit la variante de réalisation envisagée, l'embase 35 permet d'améliorer l'efficacité et la fiabilité de l'actionneur 6, et par conséquent du pilotage de la membrane 2.

Avantageusement, un organe mobile comportant, de préférence d'un seul tenant, à la fois une embase élargie 35 et une pointe 32 permet de concilier stabilité et maniabilité lors de l'assemblage d'une part, et contact robuste mais de faible interférence avec la membrane 2 d'autre part.

A titre indicatif, le diamètre de l'embase 35 pourra par exemple correspondre à deux à trois fois celui du tronc 36.

Par exemple, la longueur totale hors-tout de l'organe mobile 7 pourra être sensiblement comprise entre 1 mm et 3 mm, et de préférence voisine de 1,5 mm, le diamètre du tronc 36 compris entre 200 $\mu$m et 500 $\mu$m, et de préférence voisin de 300 $\mu$m, et le diamètre de l'embase 35 compris entre 800 $\mu$m et 1 mm.

La hauteur de l'embase 35 pourra quant à elle représenter de préférence moins de 30 %, de préférence moins de 25 % et préférentiellement entre 15 % et 20 % de la longueur totale du corps principal 11, ce dernier comprenant le tronc 36 et ladite embase 35.

Bien entendu, l'homme du métier sera à même d'adapter l'agencement du miroir 1, et plus particulièrement de l'organe mobile 7 et de sa partie active 12, en fonction notamment des dimensions du miroir 1 et de la membrane 2, ainsi que du degré de précision requis pour l'asservissement, ou encore de l'état de surface désiré.

A ce titre, il est parfaitement envisageable de considérer l'un ou l'autre des enseignements qui précèdent isolément ou en combinaison l'un avec l'autre, notamment en ce qui concerne la mise en oeuvre d'une pointe 32 à l'extrémité de l'organe mobile 7, quel que soit par ailleurs l'agencement selon lequel ladite pointe est introduite, en tout ou partie, dans le joint de colle 8.

Bien entendu, la présente invention concerne également un procédé de fabrication d'un miroir déformable 1 tel que décrit ci-dessus, au cours duquel on fixe par collage sur la membrane 2 un organe mobile 7 conçu pour déformer localement ladite membrane.

Selon une caractéristique conforme à l'invention, ledit procédé comporte au moins une étape (a) de profilage d'un organe mobile 7 d'actionneur au cours de laquelle on réalise, à l'extrémité 33 du corps principal 11 d'un organe mobile d'actionneur 7, une partie active 12 dont la section transverse $S_{12}$, délimitée par sa paroi latérale 14, est différente de la section transverse $S_{11}$ du corps principal 11, puis une étape (b) d'assemblage au cours de laquelle on fixe l'organe mobile 7 à la membrane 2 par collage en réalisant un joint de colle 8 qui relie ladite membrane 2 à au moins une partie de la paroi latérale 14 de la partie active 12.

Bien entendu, il est envisageable de mettre en oeuvre tout type de procédé adapté pour réaliser le profilage de l'organe mobile 7, et notamment tout procédé de moulage, d'étirage, de polissage, d'usinage, de taillage etc.

Bien entendu, ce profilage est réalisé de manière à réduite l'empreinte qu'induit la jonction 15, et plus particulièrement l'organe mobile 7, sur la face réfléchissante 3 lors du collage, et pourra correspondre à des formes variées, déterminables par exemple par simulation ou empiriquement.

De préférence, l'étape (a) de profilage conduira à former une pointe 32 venant affiner la première extrémité 33 de l'organe mobile 7.

Plus particulièrement, selon une caractéristique qui peut constituer une invention à part entière, indépendamment de la présence ou de l'absence d'une partie active 12 conforme à l'invention, l'étape (b) d'assemblage peut comporter une sous-étape (b1) d'encollage par transfert au cours de laquelle on vient placer l'extrémité 33 de l'organe mobile 7 au contact d'une réserve de colle, et plus particulièrement au cours de laquelle on amène la partie active 12 profilée au contact d'une masse de colle sensiblement liquide, voire on plonge légèrement la pointe 32 dans ladite masse de colle, afin de prélever par capillarité une goutte de colle mouillant ladite extrémité, puis une sous-étape (b2) de jonction au cours de laquelle on vient appliquer l'extrémité ainsi encollée de l'organe mobile 7 contre la face cachée 4 de la membrane 2.

Avantageusement, un tel procédé permet de limiter la quantité de colle prélevée et appliquée contre la membrane 2 à une quantité minimale juste nécessaire et suffisante pour assurer la fixation convenable de l'organe mobile 7 sur la membrane 2, et par conséquent de limiter le phénomène d'empreinte.

De surcroît, un tel procédé permet de garantir une approche particulièrement précise et régulière des organes mobiles 7 lorsque ceux-ci doivent accoster la membrane 2.

A ce titre, bien qu'il soit envisageable que les sous-étapes (b1) d'encollage et/ou (b2) de jonction puissent être opérées individuellement, un organe mobile à la fois, elles seront de façon particulièrement préférentielle menées collectivement, une pluralité, sinon la totalité des organes mobiles du miroir étant manipulés, encollés puis appliqués au dos de la membrane de façon simultanée, par lot partiel ou de préférence par groupe entier d'organes mobiles, au moyen d'un organe préhenseur approprié permettant de les disposer et de les maintenir lors de chacune desdites opérations selon l'agencement du réseau retenu.

Avantageusement, la masse de colle au contact de laquelle on vient effectuer la sous-étape (b1) d'encollage par transfert peut alors se présenter sous forme d'une bande encollée sur l'une de ses faces, de dimensions supérieures ou égales à celles de la superficie occupée par les organes mobiles 7, et de préférence sensiblement plane, contre laquelle on vient appliquer simultanément, et de préférence selon un mouvement d'approche sensiblement normal à ladite face, les pointes saillantes de l'ensemble desdits organes mobiles, eux-mêmes maintenus latéralement les uns par rapport aux autres, sensiblement dans leur configuration définitive, par un support approprié.

Bien entendu, le procédé, qui s'appliquera de préférence à une membrane plane, pourra comporter une étape (c) de déformation de la membrane au cours de laquelle on confère à ladite membrane 2 un profil moyen $P_0$ non plan, par exemple parabolique ou sphérique.

Avantageusement, aussi bien lors de la sous-étape (b1) d'encollage par transfert que lors de la sous-étape (b2) de jonction, on contrôle l'enfoncement de l'organe mobile 7, et plus particulièrement de la pointe 32 formant sa partie active 12, de telle sorte que la colle puisse remonter partiellement le long de la paroi latérale 14 de la partie active 12, et plus particulièrement le long du tronçon de transition 31 de la pointe 32, mais que ladite colle reste sensiblement en retrait du corps principal 11, et plus particulièrement de la base large de la pointe 32.

En particulier, lors de la sous-étape (b2) de jonction, lorsque l'on applique un effort de compression tendant à rapprocher la pointe 32 de la face cachée 4 de manière à ce que la goutte de colle prélevée adhère à et s'étale, avantageusement librement, sur ladite face cachée, tandis qu'elle est sensiblement écrasée et chassée par ladite pointe 32, on veille de préférence à maintenir au moins une portion de ladite pointe en dehors du joint de colle.

A ce titre, il est remarquable que la variation progressive du tronçon de transition 31 permet avantageusement d'ajuster le degré d'enfoncement de l'organe mobile 7 dans la colle.

On peut ainsi envisager de régler finement la position au repos dudit organe par rapport à la membrane 2, de même que la superficie effective d'encollage sur la paroi latérale 14, et par conséquent la résistance mécanique et la raideur de la jonction 15, et ce de façon progressive en conservant, quel que soit le réglage retenu, le bénéfice de la fonction anti-empreinte procurée par le profil spécifique de la partie active 12.

Bien entendu, le procédé comportera ensuite une étape de polymérisation ou de « *séchage* » au cours de laquelle on laisse « *durcir* » le joint de colle 8.

Ainsi, la présente invention permet avantageusement de réaliser, au moyen d'un procédé polyvalent applicable tant à des miroirs plans qu'à des miroirs bombés, un miroir déformable présentant une excellente finition, un haut degré de précision, une bonne vitesse d'exécution lors des modifications dynamiques de la configuration de sa membrane par les actionneurs 6, c'est-à-dire un faible temps de réponse, ainsi qu'une bonne stabilité mécanique et thermique, et ce tout en conservant une structure relativement simple, compacte et relativement facile à assembler, à modifier, ou à remettre en état, qui permet le cas échéant d'augmenter la densité spatiale des actionneurs et la résolution spatiale d'ajustement de la surface réfléchissante du miroir.

POSSIBILITE D'APPLICATION INDUSTRIELLE

La présente invention trouve notamment son application industrielle dans la réalisation de miroirs et de systèmes optiques adaptatifs.

**Revendications**

1. - Miroir déformable (1) comportant une membrane (2) déformable possédant une face réfléchissante (3) et une face cachée (4) opposée, ladite membrane (2) étant montée sur un support (5) pourvu d'au moins un actionneur (6) conçu pour déformer ladite membrane (2), ledit actionneur (6) comprenant au moins un organe mobile (7) fixé à la membrane (2) par un joint de colle (8), ledit organe mobile (7) possédant un corps principal (11), situé hors du joint de colle (8), qui se prolonge par une partie active (12) qui pénètre en tout ou partie dans ledit joint de colle (8) de telle sorte que ledit joint de colle (8), formant un cône souple, d'une part adhère à et s'étale sur la face cachée (4) sensiblement parallèle à la face réfléchissante (3) et d'autre part adhère au moins en partie sur la paroi latérale (14) de ladite partie active (12) pour assurer une jonction (15) entre l'organe mobile (7) et la membrane (2), ladite partie active présentant une section transverse ($S_{12}$), délimitée par ladite paroi latérale (14), qui se différencie de la section transverse ($S_{11}$) du corps principal (11), la partie active (12) formant une pointe (32) à la première extrémité (33) de l'organe mobile (7), la pointe (32) étant enfoncée partiellement dans le joint de colle (8).

2. - Miroir déformable selon la revendication 1 **caractérisé en ce que** la portion immergée (25) de la partie active (12), noyée dans le joint de colle (8), présente au moins une variation dimensionnelle de sa section transverse ($S_{12}$).

3. - Miroir déformable selon la revendication 1 ou 2 **caractérisé en ce que** la partie active (12) présente un tronçon de transition (31) le long duquel sa section transverse ($S_{12}$) varie progressivement.

4. - Miroir déformable selon les revendications 2 et 3 **caractérisé en ce que** le tronçon de transition (31) s'étend de part et d'autre de l'interface colle-atmosphère (27) qui marque la séparation entre la portion émergente (26) et la portion immergée (25) de la partie active (12).

5. - Miroir déformable selon l'une des revendications précédentes **caractérisé en ce que** la section transverse ($S_{12}$) de la partie active (12) varie de sorte à présenter au moins un rétrécissement.

6. - Miroir déformable selon l'une des revendications précédentes, **caractérisé en ce que** la pointe (32) présente une forme sensiblement conique, tronconique, arrondie en dôme, ou hyperboloïde.

7. - Miroir déformable selon l'une des revendications précédentes, **caractérisé en ce que** le joint de colle (8) est formé par une goutte de colle dont la base large adhère à la face cachée (4) sensiblement parallèle à la face réfléchissante (3) et dans le sommet de laquelle pénètre la pointe (32).

8. - Miroir déformable selon l'une des revendications précédentes **caractérisé en ce que** la hauteur totale (Hs) du joint de colle (8), mesurée entre la face cachée (4) et l'interface colle-atmosphère (27), est sensiblement comprise entre 100 $\mu$m et 300 $\mu$m.

9. - Miroir déformable selon l'une des revendications précédentes **caractérisé en ce que** l'organe mobile (7) présente, à sa seconde extrémité (34) opposée à la partie active (12), une embase (35) élargie.

10. -Miroir déformable selon la revendication 9 **caractérisé en ce que** l'organe mobile (7) suspend à la membrane (2) un aimant permanent (10) dont le diamètre est sensiblement égal à celui de l'embase (35).

11. - Miroir déformable selon la revendication 9 ou 10 **caractérisé en ce que** l'embase (35) est ferromagnétique.

12. -Miroir déformable selon l'une des revendications précédentes **caractérisé en ce que** l'organe mobile (7) est formé par une tige qui est fixée à la face cachée (4) de la membrane (2), opposée à la face réfléchissante (3), et qui est réalisée d'un seul tenant dans un matériau rigide, de préférence à partir d'un jonc composite de type fibre de carbone/matrice époxy, en fibre de verre ou métallique.

13. -Miroir déformable selon l'une des revendications précédentes **caractérisé en ce que** l'organe mobile (7) est formé par un aimant permanent monolithique qui est taillé en pointe.

14. -Miroir déformable selon l'une des revendications précédentes **caractérisé en ce qu'**il comporte une pluralité d'organes mobiles (7) indépendants les uns des autres et reliés à la membrane déformable (2) respectivement par une pluralité de joints de colle (8) qui sont séparés les uns des autres.

15. -Miroir déformable selon l'une des revendications précédentes **caractérisé en ce que** la rugosité quadratique (Rq) de la face réfléchissante (3), après jonction par collage de la membrane (2) avec l'organe mobile (7), est inférieure à 7 nm, de préférence inférieure ou égale à 5 nm, préférentiellement inférieure ou égale à 4 nm, voire inférieure ou égale à 3 nm.

16. -Miroir déformable selon l'une des revendications précédentes **caractérisé en ce que** la membrane déformable (2) présente une épaisseur ($e_2$) inférieure ou égale à 50 $\mu$m, de préférence inférieure ou égale à 10 $\mu$m, voire sensiblement comprise entre 3 $\mu$m et 5 $\mu$m, tandis que l'épaisseur (Es) du joint de colle séparant la partie active (12) de la membrane (2) est sensiblement inférieure ou égale à 50 $\mu$m, et de préférence sensiblement comprise entre 20 $\mu$m et 30 $\mu$m.

17. -Miroir déformable selon l'une des revendications précédentes **caractérisé en ce que** ledit organe mobile (7) est réalisé d'un seul tenant dans un matériau rigide.

18. -Procédé de fabrication d'un miroir déformable (1) comprenant une membrane déformable (2) présentant une face réfléchissante (3) et une face cachée (4) opposée, au cours duquel on fixe par collage sur ladite membrane (2) un organe mobile (7) d'actionneur (6) conçu pour déformer localement ladite membrane (2), le procédé comportant une étape (a) de profilage d'un organe mobile (7) d'actionneur au cours de laquelle on réalise, à l'extrémité du corps principal (11) d'un organe mobile d'actionneur (7), une partie active (12) dont la section transverse ($S_{12}$), délimitée par sa paroi latérale (14), est différente de la section transverse ($S_{11}$) du corps principal (11), puis une étape (b) d'assemblage au cours de laquelle on fixe l'organe mobile (7) à la membrane (2) par collage en réalisant un joint de colle (8) qui forme un cône souple, adhère à et s'étale sur la face cachée (4) sensiblement parallèle à la face réfléchissante et relie ladite membrane (2) à au moins une partie de la paroi latérale (14) de ladite partie active (12), la partie active (12) formant une pointe (32) à la première extrémité (33) de l'organe mobile (7), la pointe (32) étant enfoncée partiellement dans le joint de colle (8).

**19.** - Procédé de fabrication selon la revendication 18 **caractérisé en ce que** l'étape (b) d'assemblage comporte une sous-étape (b1) d'encollage par transfert au cours de laquelle on vient placer l'extrémité (33) de l'organe mobile (7) au contact d'une réserve de colle afin de prélever par capillarité une goutte de colle mouillant ladite extrémité (33), puis une sous-étape (b2) de jonction au cours de laquelle on vient appliquer l'extrémité encollée de l'organe mobile (7) contre la face cachée (4) de la membrane (2) opposée à la face réfléchissante (3).

**20.** - Procédé de fabrication selon la revendication 19 **caractérisé en ce que** les sous-étapes (b1) d'encollage et/ou (b2) de jonction sont menées collectivement, par lot ou par groupe entier d'organes mobiles (7).

**21.** - Procédé de fabrication selon l'une des revendications 18 à 20 **caractérisé en ce que** ledit organe mobile (7) est réalisé d'un seul tenant dans un matériau rigide.

**Patentansprüche**

**1.** Verformbarer Spiegel (1) umfassend eine verformbaren Membran (2), die eine reflektierende Seite (3) und eine gegenüberliegende verdeckte Seite (4) besitzt, wobei die Membran (2) auf einem Träger (5) montiert ist, der mit mindestens einem Aktuator (6) versehen ist, der so gestaltet ist, dass er die Membran (2) verformen kann, wobei der Aktuator (6) mindestens ein bewegliches Element (7) umfasst, das durch eine Klebstoffverbindung (8) an der Membran (2) befestigt ist, wobei das bewegliche Element (7) einen Hauptkörper (11) besitzt, der außerhalb der Klebstoffverbindung (8) liegt und sich in einen aktiven Teil (12) verlängert, der ganz oder teilweise in die Klebstoffverbindung (8) eindringt, so dass die Klebstoffverbindung (8), die einen flexiblen Konus bildet, einerseits an der verdeckten Seite (4), die im Wesentlichen parallel zur reflektierenden Seite (3) verläuft, haftet und sich auf dieser ausbreitet und andererseits zumindest teilweise an der Seitenwand (14) des aktiven Teils (12) haftet, um eine Verbindung (15) zwischen dem beweglichen Element (7) und der Membran (2) zu gewährleisten, wobei der aktive Teil einen Querschnitt ($S_{12}$) aufweist, der von der Seitenwand (14) begrenzt wird, der sich vom Querschnitt ($S_{11}$) des Hauptkörpers (11) unterscheidet, wobei der aktive Teil (12) eine Spitze (32) am ersten Ende (33) des beweglichen Elements (7) bildet, wobei die Spitze (32) teilweise in die Klebstoffverbindung (8) eingedrückt ist.

**2.** Verformbarer Spiegel nach Anspruch 1, **dadurch gekennzeichnet, dass** der eingetauchte Abschnitt (25) des aktiven Teils (12), der in die Klebstoffverbindung (8) eingelassen ist, mindestens eine Dimensionsänderung seines Querschnitts ($S_{12}$) aufweist.

**3.** Verformbarer Spiegel nach Anspruch 1 oder 2, **dadurch gekennzeichnet, dass** der aktive Teil (12) einen Übergangsabschnitt (31) aufweist, entlang dem sich sein Querschnitt ($S_{12}$) allmählich ändert.

**4.** Verformbarer Spiegel nach Anspruch 2 und 3, **dadurch gekennzeichnet, dass** sich der Übergangsabschnitt (31) zu beiden Seiten der Grenzfläche Klebstoff-Atmosphäre (27) erstreckt, die die Trennung zwischen dem auftauchenden Abschnitt (26) und dem eingetauchten Abschnitt (25) des aktiven Teils (12) markiert.

**5.** Verformbarer Spiegel nach einem der vorhergehenden Ansprüche, **dadurch gekennzeichnet, dass** sich der Querschnitt (S12) des aktiven Teils (12) so ändert, dass er mindestens eine Verjüngung aufweist.

**6.** Verformbarer Spiegel nach einem der vorhergehenden Ansprüche, **dadurch gekennzeichnet, dass** die Spitze (32) eine im Wesentlichen kegelförmige, kegelstumpfförmige, kuppelförmig abgerundete oder hyperboloide Form aufweist.

**7.** Verformbarer Spiegel nach einem der vorhergehenden Ansprüche, **dadurch gekennzeichnet, dass** die Klebstoffverbindung (8) durch einen Klebstofftropfen gebildet wird, dessen breite Basis an der verdeckten Seite (4) haftet, die im Wesentlichen parallel zur reflektierenden Seite (3) verläuft und in deren Scheitelpunkt die Spitze (32) eindringt.

8. Verformbarer Spiegel nach einem der vorhergehenden Ansprüche, **dadurch gekennzeichnet, dass** die Gesamthöhe (Hs) der Klebstoffverbindung (8), gemessen zwischen der verdeckten Seite (4) und der Grenzfläche Klebstoff-Atmosphäre (27), im Wesentlichen zwischen 100 μm und 300 μm liegt.

9. Verformbarer Spiegel nach einem der vorhergehenden Ansprüche, **dadurch gekennzeichnet, dass** das bewegliche Element (7) an seinem zweiten Ende (34), das dem aktiven Teil (12) gegenüberliegt, einen verbreiterten Sockel (35) aufweist.

10. Verformbarer Spiegel nach Anspruch 9, **dadurch gekennzeichnet, dass** das bewegliche Element (7) an der Membran (2) einen Permanentmagneten (10) aufhängt, dessen Durchmesser im Wesentlichen gleich dem des Sockels (35) ist.

11. Verformbarer Spiegel nach Anspruch 9 oder 10, **dadurch gekennzeichnet, dass** der Sockel (35) ferromagnetisch ist.

12. Verformbarer Spiegel nach einem der vorhergehenden Ansprüche, **dadurch gekennzeichnet, dass** das bewegliche Element (7) von einer Stange gebildet wird, die an der verdeckten Seite (4) der Membran (2), die der reflektierenden Seite (3) gegenüberliegt, befestigt ist und die einstückig aus einem starren Material hergestellt ist, vorzugsweise aus einem Verbundstab vom Typ Kohlefaser/Epoxidmatrix, aus Glasfaser oder aus Metall.

13. Verformbarer Spiegel nach einem der vorhergehenden Ansprüche, **dadurch gekennzeichnet, dass** das bewegliche Element (7) von einem monolithischen Permanentmagneten gebildet wird, der spitz zulaufend geschliffen ist.

14. Verformbarer Spiegel nach einem der vorhergehenden Ansprüche, **dadurch gekennzeichnet, dass** er eine Vielzahl von beweglichen Elementen (7) aufweist, die voneinander unabhängig sind und mit der verformbaren Membran (2) jeweils durch eine Vielzahl von Klebstoffverbindungen (8) verbunden sind, die voneinander getrennt sind.

15. Verformbarer Spiegel nach einem der vorhergehenden Ansprüche, **dadurch gekennzeichnet, dass** die quadratische Rauheit ($R_q$) der reflektierenden Seite (3), nach der Klebstoffverbindung der Membran (2) mit dem beweglichen Element (7), kleiner als 7 nm, vorzugsweise kleiner oder gleich 5 nm, bevorzugt kleiner oder gleich 4 nm oder sogar kleiner oder gleich 3 nm ist.

16. Verformbarer Spiegel nach einem der vorhergehenden Ansprüche, **dadurch gekennzeichnet, dass** die verformbare Membran (2) eine Dicke ($e_2$) von weniger als oder gleich 50 μm, vorzugsweise weniger als oder gleich 10 μm, oder sogar im Wesentlichen zwischen 3 μm und 5 μm aufweist, während die Dicke (Es) der Klebstoffverbindung, die den aktiven Teil (12) von der Membran (2) trennt, im Wesentlichen weniger als oder gleich 50 μm, und vorzugsweise im Wesentlichen zwischen 20 μm und 30 μm beträgt.

17. Verformbarer Spiegel nach einem der vorhergehenden Ansprüche, **dadurch gekennzeichnet, dass** das bewegliche Element (7) einstückig aus einem starren Material hergestellt ist.

18. Verfahren zur Herstellung eines verformbaren Spiegels (1) mit einer verformbaren Membran (2), die eine reflektierende Seite (3) und eine gegenüberliegende verdeckte Seite (4) aufweist, in dessen Verlauf ein bewegliches Element (7) eines Aktuators (6), das so gestaltet ist, dass es die Membran (2) lokal verformt, durch Kleben an der Membran (2) befestigt wird, wobei das Verfahren einen Schritt (a) des Profilierens eines beweglichen Elements (7) des Aktuators umfasst, in dessen Verlauf am Ende des Hauptkörpers (11) eines beweglichen Elements (7) des Aktuators ein aktiver Teil (12) hergestellt wird, dessen Querschnitt ($S_{12}$), der durch seine Seitenwand (14) begrenzt wird, sich vom Querschnitt ($S_{11}$) des Hauptkörpers (11) unterscheidet, und dann einen Schritt (b) des Zusammenfügens, in dessen Verlauf man das bewegliche Element (7) an der Membran (2) durch Kleben befestigt, indem man eine Klebstoffverbindung (8) herstellt, die einen flexiblen Konus bildet, an der im Wesentlichen parallel zur reflektierenden Seite verlaufenden verdeckten Seite (4) haftet und sich auf dieser ausbreitet und die Membran (2) mit mindestens einem Teil der Seitenwand (14) des aktiven Teils (12) verbindet, wobei der aktive Teil (12) am ersten Ende (33) des beweglichen Elements (7) eine Spitze (32) bildet und die Spitze (32) teilweise in die Klebstoffverbindung (8) eingedrückt wird.

19. Herstellungsverfahren nach Anspruch 18, **dadurch gekennzeichnet, dass** der Schritt (b) des Zusammenfügens einen Unterschritt (b1) des Transferklebens umfasst, in dessen Verlauf man das Ende (33) des beweglichen Elements (7) in Kontakt mit einer Klebstoffreserve bringt, um durch Kapillarwirkung einen Klebstofftropfen zu entnehmen, der das Ende (33) benetzt, dann einen Unterschritt (b2) des Verbindens, in dessen Verlauf man das mit Klebstoff versehene Ende des beweglichen Elements (7) gegen die verdeckte Seite (4) der Membran (2), die der reflektierenden Seite (3) gegenüberliegt, anlegt.

20. Herstellungsverfahren nach Anspruch 19, **dadurch**

**gekennzeichnet, dass** die Teilschritte (b1) des Klebens und/oder (b2) des Verbindens kollektiv, pro Partie oder pro ganze Gruppe von beweglichen Elementen (7) durchgeführt werden.

21. Herstellungsverfahren nach einem der Ansprüche 18 bis 20, **dadurch gekennzeichnet, dass** das bewegliche Element (7) einstückig aus einem starren Material hergestellt wird.

**Claims**

1. A deformable mirror (1) comprising a deformable membrane (2) having a reflecting face (3) and an opposite hidden face (4), said membrane (2) being mounted on a support (5) provided with at least one actuator (6) adapted to deform said membrane (2), said actuator (6) comprising at least one movable member (7) fixed to the membrane (2) by an adhesive joint (8), said movable member (7) having a main body (11), located outside the adhesive joint (8), which is continued by an active part (12) that penetrates entirely or in part into said adhesive joint (8), in such a way that said adhesive joint (8), forming a flexible cone, on the one hand, adheres to and spreads over the hidden face (4) substantially parallel to the reflecting face (3), and on the other hand, adheres at least in part to the side wall (14) of said active part (12) to ensure a junction (15) between the movable member (7) and the membrane (2), said active part having a cross-section ($S_{12}$), delimited by said side wall (14), which is different from the cross-section ($S_{11}$) of the main body (11), the active part (12) forming a tip (32) at the first end (33) of the movable member (7), the tip (32) being partially embedded in the adhesive joint (8).

2. A deformable mirror according to claim 1, **characterized in that** the immersed portion (25) of the active part (12), embedded in the adhesive joint (8), has at least one size variation of its cross-section ($S_{12}$).

3. A deformable mirror according to claim 1 or 2, **characterized in that** the active part (12) has a transition length (31), along which the cross-section ($S_{12}$) thereof varies progressively.

4. A deformable mirror according to claims 2 and 3, **characterized in that** the transition length (31) extends on either side of the adhesive-atmosphere interface (27) that forms the separation between the emerging portion (26) and the immersed portion (25) of the active part (12).

5. A deformable mirror according to one of the preceding claims, **characterized in that** the cross-section ($S_{12}$) of the active part (12) varies in such a way to show at least one narrowing.

6. A deformable mirror according to one of the preceding claims, **characterized in that** the tip (32) is substantially conical, frustoconical, rounded as a dome, or hyperboloidal.

7. A deformable mirror according to one of the preceding claims, **characterized in that** the adhesive joint (8) is formed by a drop of adhesive, whose wide base adheres to the hidden face (4) substantially parallel to the reflecting face (3) and through the apex of which the tips (32) penetrates.

8. A deformable mirror according to one of the preceding claims, **characterized in that** the total height ($H_8$) of the adhesive joint (8), measured between the hidden face (4) and the adhesive-atmosphere interface (27), is substantially comprised between 100 $\mu$m and 300 $\mu$m.

9. A deformable mirror according to one of the preceding claims, **characterized in that** the movable member (7) has, at its second end (34), opposed to the active part (12), a widen footing (35).

10. A deformable mirror according to claim 9, **characterized in that** the movable member (7) hangs to the membrane (2) a permanent magnet (10), whose diameter is substantially equal to that of the footing (35).

11. A deformable mirror according to claim 9 or 10, **characterized in that** the footing (35) is ferromagnetic.

12. A deformable mirror according to one of the preceding claims, **characterized in that** the movable member (7) is formed by a rod that is fixed to the hidden face (4) of the membrane (2), opposed to the reflecting face (3), and that is made single-piece in a rigid material, preferably from a carbon fibre / epoxy matrix type composite, glass fibre or metallic bar.

13. A deformable mirror according to one of the preceding claims, **characterized in that** the movable member (7) is formed by a monolithic permanent magnet that is sharpen.

14. A deformable mirror according to one of the preceding claims, **characterized in that** a plurality of movable members (7) independent from each other and connected to the deformable membrane (2) by a plurality of adhesive joins (8), respectively, which are separated from each other.

15. A deformable mirror according to one of the preceding claims, **characterized in that** the quadratic roughness (Rq) of the reflecting face (3), after the adhesive junction of the membrane (2) with the movable member (7), is lower than 7 nm, preferably lower than or equal to 5 nm, preferentially lower than or equal to 4 nm, or even lower than or equal to 3 nm.

16. A deformable mirror according to one of the preceding claims, **characterized in that** the deformable membrane (2) has a thickness ($e_2$) lower than or equal to 50 $\mu$m, preferably lower than or equal to 10 $\mu$m, or even substantially comprised between 3 $\mu$m and 5 $\mu$m, whereas the thickness (Es) of the adhesive joint separating the active part (12) from the membrane (2) is substantially lower than or equal to 50 $\mu$m, and preferably substantially comprised between 20 $\mu$m and 30 $\mu$m.

17. A deformable mirror according to one of the preceding claims, **characterized in that** the movable member (7) is made single-piece in a rigid material.

18. A method for manufacturing a deformable mirror (1) comprising a deformable membrane (2) having a reflecting face (3) and an opposite hidden face (4), wherein a movable member (7) of an actuator (6) adapted to locally deform said membrane (2) is adhesively fixed to said membrane (2), the method comprising a step (a) of profiling a movable member (7) of an actuator, wherein, at the end of the main body (11) of an actuator movable member (7), is made an active part (12) whose cross-section ($S_{12}$), delimited by the side wall thereof (14), is different from the cross-section ($S_{11}$) of the main body (11), and a step (b) of assembling, wherein the movable member (7) is adhesively fixed to the membrane (2), through the making of an adhesive joint (8) which forms a flexible cone, adheres to and spread over the hidden face (4) substantially parallel to the reflecting face and connects said membrane (2) to at least one part of the side wall (14) of said active part (12), the active part (12) forming a tip (32) at the first end (33) of the movable member (7), the tip (32) being partially embedded in the adhesive joint (8).

19. A method of manufacturing according to claim 18, **characterized in that** the step (b) of assembling comprises a sub-step (b1) of transfer adhesive-coating, wherein the end (33) of the movable member (7) is placed in contact with an adhesive resist, in order to take by capillarity a drop of adhesive wetting said end (33), and a sub-step (b2) of junction, wherein the adhesive-coated end of the movable member (7) is applied against the hidden face (4) of the membrane (2), opposed to the reflecting face (3).

20. A method of manufacturing according to claim 19, **characterized in that** the substeps (b1) of adhesive coating and/or (b2) of junction are carried out collectively, by batch or by entire group of movable members (7).

21. A method of manufacturing according to one of claims 18 to 20, **characterized in that** the movable member (7) is made single-piece in a rigid material.

FIG.1

FIG.2

FIG.3

FIG.4

FIG. 5A   FIG. 5B   FIG. 5C   FIG. 5D   FIG. 5E

FIG.6

**EP 2 556 404 B1**

## RÉFÉRENCES CITÉES DANS LA DESCRIPTION

**Documents brevets cités dans la description**

- JP 8248214 A